(19) Europäisches Patentamt

European Patent Office

Office européen des brevets

(11) **EP 3 597 537 A1**

(12) **EUROPEAN PATENT APPLICATION**

(43) Date of publication:
**22.01.2020 Bulletin 2020/04**

(51) Int Cl.:
**B64C 27/00** (2006.01)    **F16F 15/22** (2006.01)
**F16F 7/10** (2006.01)

(21) Application number: **19196033.5**

(22) Date of filing: **22.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2012 US 201261736148 P**

(62) Document number(s) of the earlier application(s) in accordance with Art. 76 EPC:
**13811656.1 / 2 931 602**

(71) Applicant: **LORD Corporation**
**Cary, NC 27511 (US)**

(72) Inventors:
• **Black, Paul**
  **Fuquay-Varina, NC North Carolina 27526 (US)**
• **Swanson, Doug**
  **Cary, NC North Carolina 27519 (US)**
• **Badre-Alam, Askari**
  **Cary, NC North Carolina 27518 (US)**
• **Janowski, Michael**
  **Clayton, NC North Carolina 27527 (US)**
• **Altieri, Russell**
  **Holly Springs, NC North Carolina 27540 (US)**
• **Meyers, Andrew**
  **Apex, NC North Carolina 27502 (US)**
• **Ryu, Jihan**
  **Apex, NC North Carolina 27502 (US)**

(74) Representative: **Murgitroyd & Company**
**Murgitroyd House**
**165-169 Scotland Street**
**Glasgow G5 8PL (GB)**

Remarks:
This application was filed on 06-09-2019 as a divisional application to the application mentioned under INID code 62.

(54) **IMPROVED CIRCULAR FORCE GENERATOR DEVICES, SYSTEMS, AND METHODS FOR USE IN AN ACTIVE VIBRATION CONTROL SYSTEM**

(57) A circular force generator (CFG) (100) is provided for use in an active vibration control system. The CFG comprises a component housing, and a center shaft (120) positioned in a fixed relationship with respect to the component housing. The CFG further comprises a pair of motors (110) each having a rotor (116) and a fixed stator (112), the stator mounted to endplates (114). A rotating mass (150) is eccentrically connected to each rotor (116) such that rotation of the rotor (116) about the shaft (120) generates a circular force with a rotating force magnitude and a controllable rotating force phase. The rotor (116) of each motor (110) is coupled for rotation about the center shaft (120) by a bearing (130) mounted inside the motor (110).

FIG. 2

EP 3 597 537 A1

**Description**

**TECHNICAL FIELD**

The subject matter disclosed herein relates to devices, systems, and methods for controlling problematic vehicle vibrations. More particularly, the subject matter disclosed herein relates to methods and systems for controlling helicopter and/or fixed wing vehicle vibrations and/or noise, particularly methods and systems for canceling problematic rotating helicopter vibrations.

**BACKGROUND**

Helicopter vibrations are particularly troublesome in that they can cause fatigue and wear on the equipment and occupants in the aircraft. In vehicles such as helicopters, vibrations are particularly problematic in that they can damage the actual structure and components that make up the vehicle in addition to the contents of the vehicle.

There is a need for a system and method of accurately and economically canceling rotating vehicle vibrations, accurately controlling rotary wing vibrations in a weight efficient manner, controlling vibrations in a helicopter hub so that the vibrations are efficiently minimized, and/or controlling problematic helicopter vibrations.

**SUMMARY**

In accordance with this disclosure, improved rotary actuator devices, systems, and methods are provided in which a center shaft is positioned in a fixed relationship with respect to a component housing. At least one movable body can be positioned in the component housing and rotatably coupled to the center shaft by a bearing, the at least one movable body comprising a motor rotor and at least one eccentric mass. With this configuration, the motor can be configured to cause rotation of the movable body about the center shaft to produce a rotating force with a rotating force magnitude and a controllable rotating force phase.

In another aspect, a method of active vibration control can comprise rotating at least one movable body about a center shaft positioned in a fixed relationship with respect to a component housing, the at least one movable body being rotatably coupled to the center shaft by a bearing, and the at least one movable body comprising at least one eccentric mass, wherein rotating the at least one movable body produces a rotating force. The method can further comprise controlling at least one of a rotating force magnitude and a rotating force phase of the rotating force.

Although some of the aspects of the subject matter disclosed herein have been stated hereinabove, and which are achieved in whole or in part by the presently disclosed subject matter, other aspects will become evident as the description proceeds when taken in connection with the accompanying drawings as best described hereinbelow.

**BRIEF DESCRIPTION OF THE DRAWINGS**

Figure 1A is a graph illustrating a relationship between the bore diameter of a bearing of a circular force generator and the power required for operation of the circular force generator.

Figure 1B is a graph illustrating a relationship between the frequency of operation of a circular force generator and the power required for operation.

Figure 2 is a sectional side view illustrating a circular force generator according to an embodiment of the presently disclosed subject matter.

Figure 3 is an exploded perspective view illustrating a circular force generator according to an embodiment of the presently disclosed subject matter.

Figure 4 is a partially-exploded perspective view illustrating a motor of a circular force generator according to an embodiment of the presently disclosed subject matter.

Figure 5A is a graph illustrating the position control error of a conventional circular force generator that uses an encoder.

Figure 5B is a graph illustrating the position control error of a circular force generator using a Hall-effect servo control system according to an embodiment of the presently disclosed subject matter.

Figures 6A-6D are perspective views illustrating various form factors for circular force generators according to embodiments of the presently disclosed subject matter.

Figure 7 is a sectional side view illustrating a circular force generator having integrated control electronics according to an embodiment of the presently disclosed subject matter.

Figure 8 is a schematic view illustrating an active vibration control system according to an embodiment of the presently disclosed subject matter.

Figure 9 is a schematic model illustrating two masses rotating about a common axis.

Figure 10 is a graph illustrating the bi-axial force output of 2 circular force generators (e.g., 4 rotating masses).

Figures 11A and 11B are force diagrams for circular force generators having two rotating masses according to embodiments of the presently disclosed subject matter.

Figure 12 is a graph illustrating a relationship between force output and moment output for a circular force generator having plural rotating masses according to an embodiment of the presently disclosed subject matter.

Figure 13A is a graph illustrating a relationship between maximum N/rev force and maximum 2nd harmonic force for a circular force generator according to an embodiment of the presently disclosed subject matter.

Figure 13B is a graph illustrating a relationship between maximum N/rev force and maximum residual moment for a circular force generator according to an embodiment of the presently disclosed subject matter.

Figures 14A to 14C are illustrations of a weight-optimized mass for a circular force generator according to an embodiment of the presently disclosed subject matter.

Figures 15A to 15C are illustrations of a moment-optimized mass for a circular force generator according to an embodiment of the presently disclosed subject matter.

Figure 16 shows a block diagram of a motor control gravity compensation that uses the vertical acceleration at the base of the circular force generator to reduce the force distortion at the second harmonic according to an embodiment of the presently disclosed subject matter.

## DETAILED DESCRIPTION

The present subject matter provides improvement in circular force generators (CFGs) for use in an active vibration control system, such as is used to control vibration in a helicopter. The disclosed devices, systems, and methods can entail modifications to both software and hardware to control the CFG and/or to minimize force distortion created by the CFG. These devices, systems, and methods can be implemented in the CFG and can be particularly useful under low force operating conditions where the residual vibration created by the CFG can be larger than the vibration created by the main rotor of the helicopter, which can be undesirable to the customer. Low force is typically less than 30% of the maximum force output of the CFG and on a helicopter active vibration control system can occur during conditions such as hover or at mid-speed flight ranges (e.g. 80-100 kias).

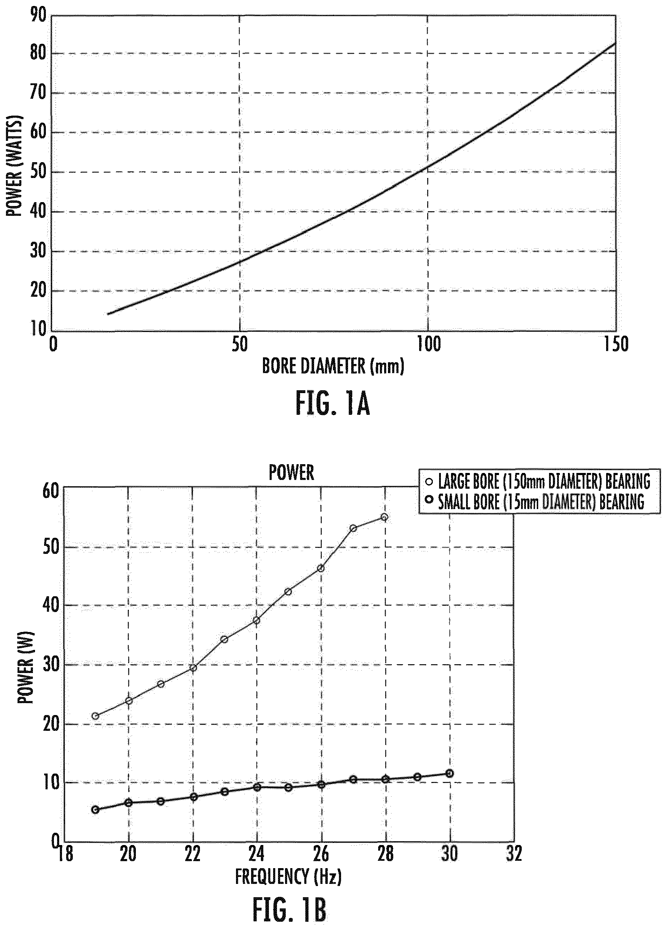

In a first aspect, the disclosed devices, systems, and methods can involve the use of a CFG having a bearing (e.g., a ball bearing or other rolling-element bearing) with a diameter that can be comparatively smaller than that of a conventional CFG. Large diameter bearings were used in the past partially due to the sensing technology (centerline encoder), which did not allow for a center shaft with small diameter bearing. Specifically, for example, whereas conventional CFGs can have a bearing diameter of about 150 mm, a CFG according to the present subject matter can be configured to have a bearing diameter of about 15 mm. The reduced bearing diameter can result in a reduced ball speed during operation at a given rotational speed compared to conventional systems, thereby lowering power requirements. (See, e.g., Figure 1A) Furthermore, as shown in Figure 1B, even when the frequency of operation is increased, the power required for such operation can be maintained at a comparatively lower level.

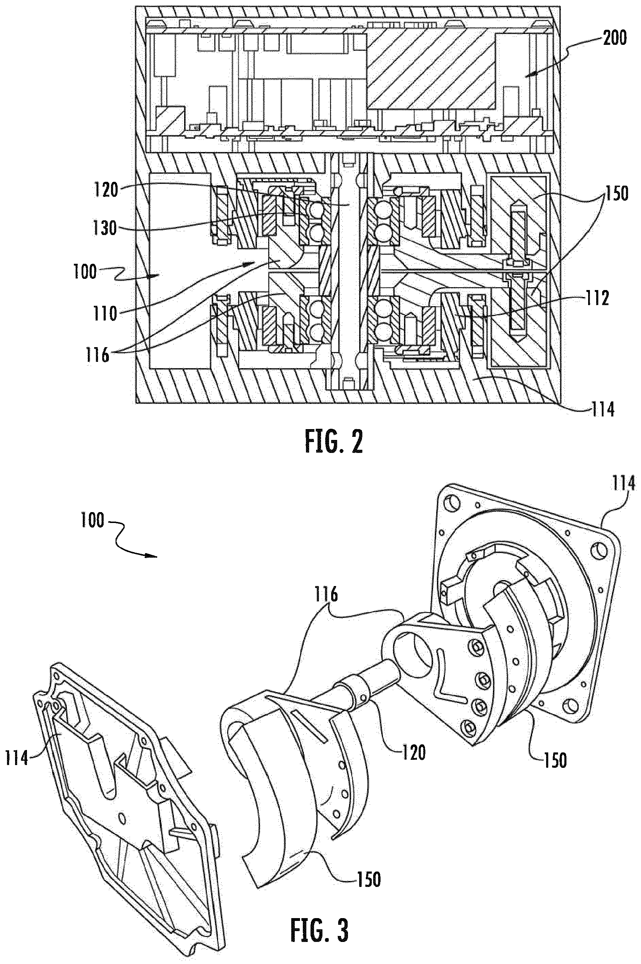

In a particular configuration shown in Figures 2 and 3, for example, a CFG, generally designated **100**, includes a pair of motors **110** each having a stator **112** mounted to endplates **114**. A rotor **116** of each motor **110** is coupled for rotation about a stationary center shaft **120** by a bearing **130** mounted inside the motor **110**. A rotating mass **150** is eccentrically connected to each rotor **116** such that rotation of the rotor **116** about the shaft **120** can generate a "circular" force.

Each of these elements of such a configuration allows for a comparatively lower profile design. In particular, the size of the bearing **130** provides a number of advantages over conventional CFG configurations. In some aspects, such novel bearings can be press fit on or about portions of a shaft and/or rotor frames to reduce any differential in thermal expansion. Moreover, the shaft, rotor, bearings, and/or portions thereof can be fabricated out of materials having a same or similar coefficient of thermal expansion (CTE). This can be advantageous for both improving wear and reducing fatigue. Such components can each be fabricated from a similar steel material or alloy, a similar aluminum (Al) material or alloy, or any other similar materials or metals having similar CTEs. Bearings, which can be press fit on steel shaft or rotors, improves wear fatigue and allows for smaller internal clearances. The improved bearings can be disposed on or about a centerline shaft. This results in a lowered drag torque, which results in reduced power requirements and a reduced motor size. For example, the CFG **100** having such a configuration operates at a much lower power level as discussed above. In addition, the bearing **130** generates less heat as a result, allowing the CFG **100** to operate in an extended temperature range (e.g., between about -54 to 70 °C). The press fit of bearing onto shaft also produces less noise than current bearings. The increased ratio of the size of the balls within the bearing **130** with respect to the cross sectional dimension further enables a longer operating life for the CFG **100** compared to traditional designs.

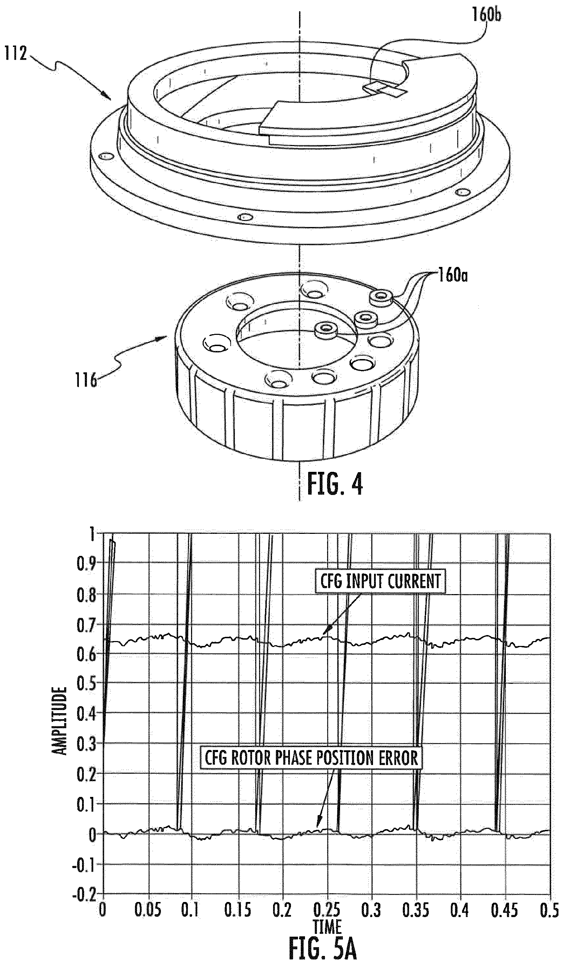

In another aspect, the improved CFG devices, systems, and methods include a high accuracy servo controller **200** that uses a plurality of rotating mass sensors to monitor the rotational position of the rotating mass **150** on the rotor **116** being driven by the motor **110** such that the controller **200** knows the rotational phase position of the rotating mass **150**. For example, the rotating mass sensors can comprise Hall-effect sensors configured for sensing the rotation of a magnetic rotating mass sensor target to provide out through a circuit board **202** to the system controller the rotational position of the rotating mass **150**. In one particular configuration shown in Figure 4, and in addition to one or more standard commutation Hall sensors (e.g., embedded within stator **112**), an additional 1/rev Hall sensor **160b** (e.g., mounted on a printed circuit board on top of stator **112**) can be used for servo control of the CFG **100**. Specifically, 1/rev Hall sensor **160b** can be configured to precisely monitor the position of rotor **116** based on the position of one or more target magnets **160a**. The configuration shown in Figure 4 is but one exemplary arrangement, and the particular number and positioning of the rotating mass sensors can be modified based on a variety of design considerations of the system.

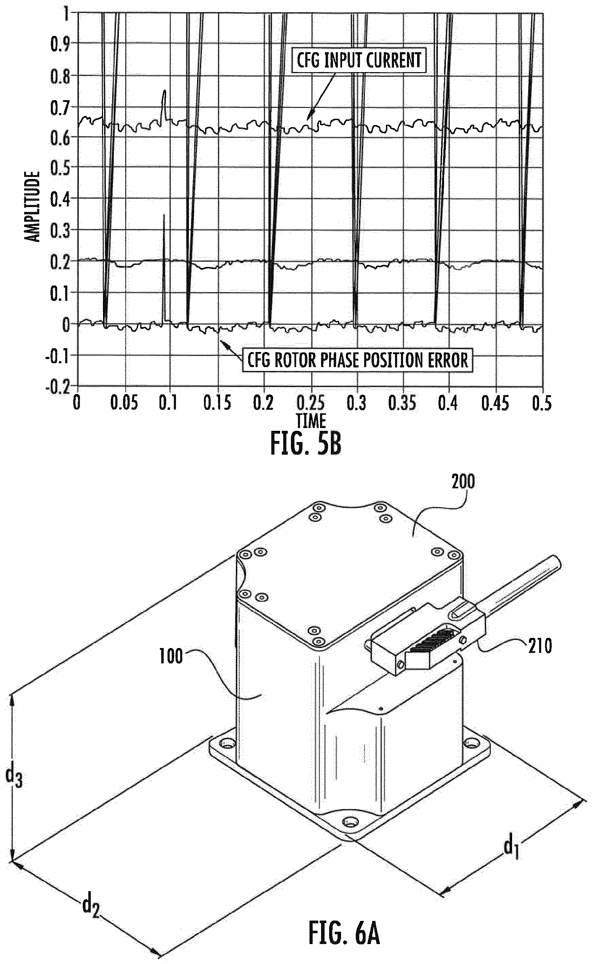

The accuracy of such a control configuration can be comparable to an encoder or resolver servo controller. As shown in Figures 5A and 5B, the position control error realized when using an encoder (See Fig. 5A) is only marginally better than the hall-effect sensor position control error (See Fig. 5B). By eliminating the need for an encoder or resolver, however, even if there is a small increase in position control error, that small detriment is offset by the great simplification in the design (e.g., reduce size/cost) and electronics. Furthermore, as discussed above with reference to Figure 4, such a configuration only requires one additional hall sensor (i.e., 1/rev Hall sensor **160b**), which can be built into the existing motor circuitry.

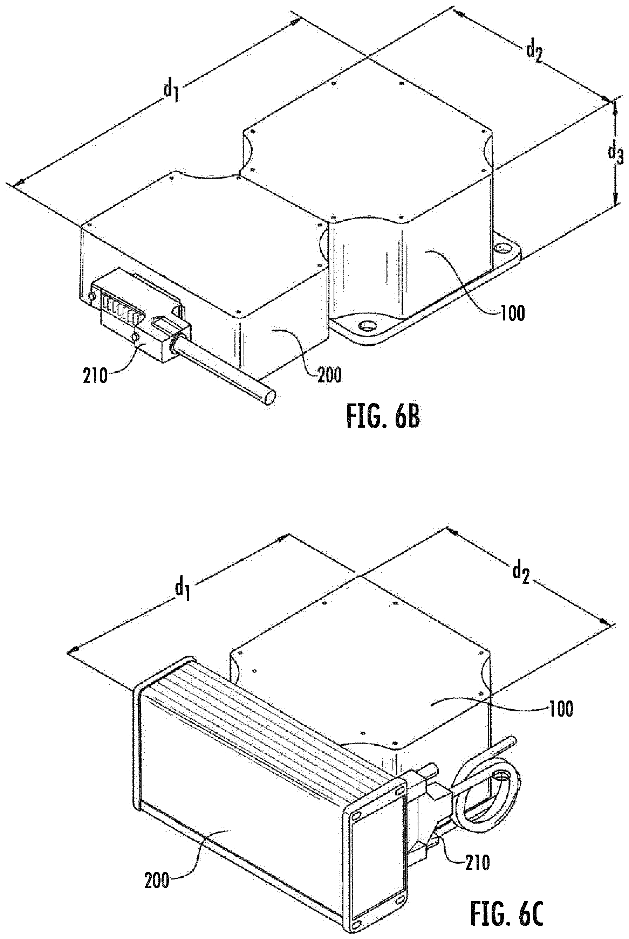

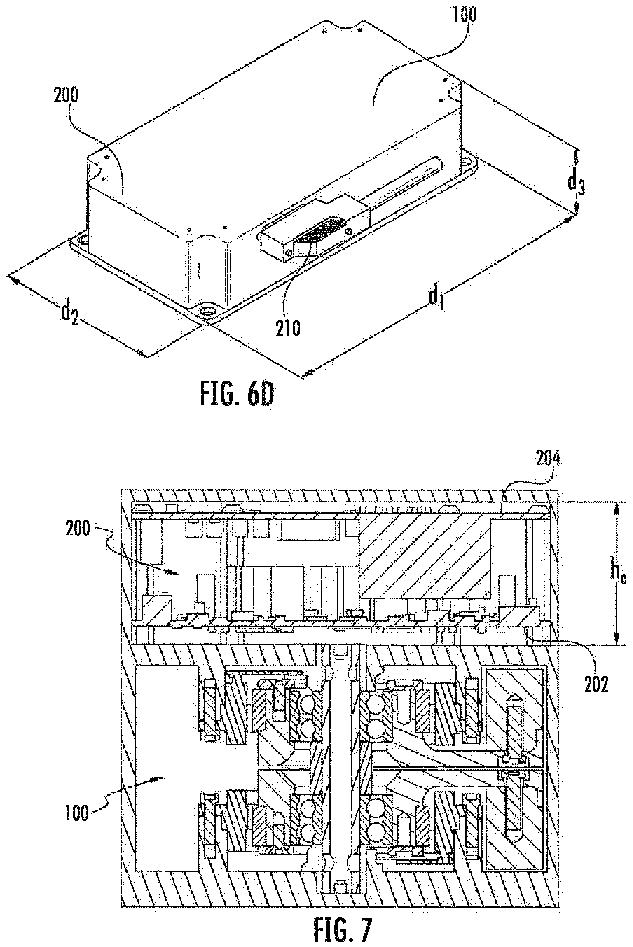

A further feature of the disclosed devices, systems, and methods is that, rather than being oil-lubricated, the bearing **130** can be a substantially sealed greased bearing. This feature simplifies lubrication requirements and allows the CFG **100** to be mounted in any orientation, thereby improving flexibility of the system and its ability to match the complex vibration field in the helicopter in an optimal manner. In this regard, as shown in Figures 6A-6D, a modular CFG according to the presently-disclosed subject matter is easily implemented in any of a variety of different form factors. For instance, Figure 6A shows the CFG **100** and the controller **200** being arranged in a stacked configuration with a connector **210** (e.g., a D-sub connector or a D38999 connector) being connected to the controller **200** for communication with the system controller. In this configuration, both a length d1 (e.g., about 5.4 inches) and a width **d2** (e.g., about 5.4 inches) of the CFG **100** are minimized. This small footprint comes at the expense of a relatively increased height **d3** (e.g., about 4.7 inches) of the CFG **100**, but even in this arrangement, the integrated package is still relatively compact when compared to conventional systems.

Alternatively, Figures 6B-6C each show various side-by-side configurations in which the CFG **100** and the controller **200** can be arranged. Each of these exemplary configurations results in a relatively lower-profile design having a reduced height **d3** (e.g., between about 2.5 to 3 inches) compared to the stacked configuration shown in Figure 6A, although this reduction in height is offset by an increased length d1 (e.g., between about 7.1 and 10.5 inches). Those having skill in the art will recognize that the different form factors shown in Figures 6A-6D can be considered advantageous depending on the specific constraints of a particular mounting location (e.g., size, orientation, access). Furthermore, those having skill in the art will recognize that these exemplary configurations only illustrate four possible implementations, and other configurations can be used depending on these or other particular design considerations. By way of example, controller **200** may be remotely attached to CFG **100** by a cable or conduit. Additionally, controller **200** and CFG **100** may have a modular configuration where controller **200** may be detachable from CFG **100** via a plug, such as aviation quick-connect plugs. The use and positioning of the plug on the CFG is compatible with all configuration discussed herein.

Taken together, all of the improvements in the presently-disclosed CFG **100** results in a simpler mechanical assembly. For example, whereas previous CFG designs can constitute 18 machined parts, the improved CFG **100** disclosed herein (See, e.g., Figure 3) uses significantly fewer machined parts (e.g., as few as 7 parts or fewer). As a result, the compact design allows motor mounting features to be incorporated into the CFG **100**, thereby eliminating the need for separate motor retainers and/or bearing retainers. Further in this regard, the presently disclosed subject CFG **100** has a significantly lower manufacturing cost than previous designs.

Referring to Figure 7, the design can be made further compact and modular by integrating the drive electronics into the CFG **100**, which can be enabled, at least partially, as a result of the reduced heat generation of the relatively low-power CFG. For example, the controller **200** can be a highly-integrated micro-controller that includes a signal board **202** and a power board **204** that occupy an electronics volume that protrudes only a small distance $h_e$ (e.g., about 1.765 inches or less) from the CFG **100**. Such a configuration allows the controller **200** to operate as a completely stand-alone module, with the module configured to receive high-level digital commands from a small central controller. This modularity of co-located drive electronics enables any number of CFGs to be efficiently implemented.

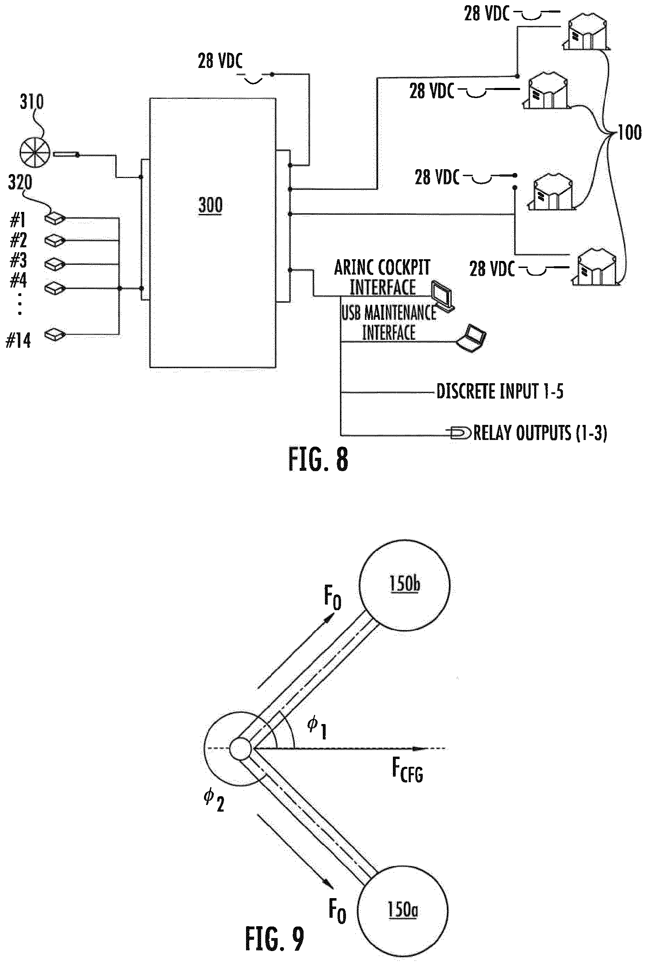

Regardless of the specific configuration of the CFG **100**, one or more of CFG **100** can be operated together as part of an active vibration control system. Figure 8 illustrates an exemplary configuration for such an active vibration control system having a plurality of CFGs **100** connected to a small central controller **300**. In addition, one or more input devices can further be connected to the central controller **300** to help determine the vibration being experienced. For example, a tachometer **310** that measures the rotor speed of the aircraft in which it is used and one or more accelerometers **320** provide inputs to the central controller **300**. Based on these inputs, each CFG can be controlled to reduce the effect of the measured vibrations on the system.

The present systems can be configured such that operating power for each CFG **100** can be provided by an unregulated aircraft power source (e.g., about 28 VDC). This low power design enables both the central controller **300** and the CFG drive electronics (i.e., controller **200**) to run off of an unregulated 28 VDC aircraft supply, which provides a wide range of advantages, such as simplifying design, saving cost, and saving the weight and space that would be required for a separate generator on a smaller aircraft. This low-power capability is helpful in active vibration control systems for smaller aircraft which only have 28 VDC aircraft power available and not the high-voltage systems (e.g., 115 VAC or 270 VAC) that are conventionally required to power the operation of force actuators.

As a result of the more compact size and modular nature of the improved CFG devices, systems, and methods disclosed herein, multiples of the CFG **100** can be arranged in pairs/arrays and specifically controlled to minimize or otherwise control force distortion created by the CFGs. For example, each CFG can be selectively operated to produce a circular force of varying magnitude and phase. The force of each rotor **116** can be determined by a size (m) of the rotating mass **150**, a distance (r) to a center of the rotating mass **150**, and its angular speed (ω):

$$F_0 = mr\omega^2,$$

With the configuration shown in Figure 9, the total CFG force of two masses (e.g., a first rotating mass **150a** and a second rotating mass **150b**) rotating about a common axis are determined by the force of each rotor and their relative phase angles:

$$F_{CFG} = 2F_0 \cos\left(\frac{\varphi_1 - \varphi_2}{2}\right)$$

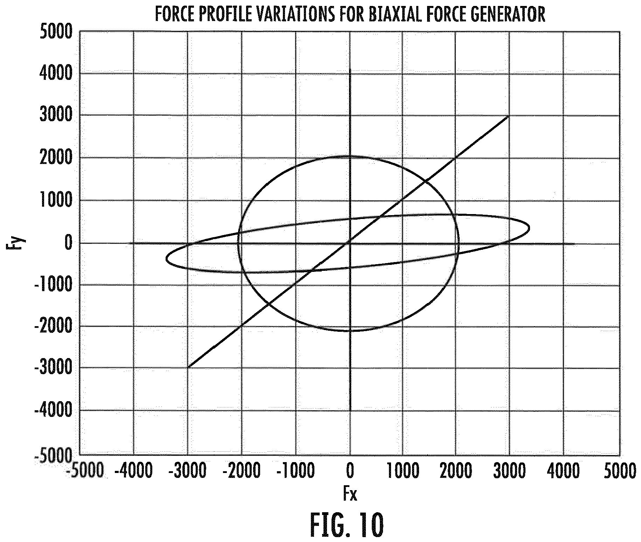

Based on such known relationships, the two imbalanced masses **150a** and **150b** can be configured to co-rotate such that the combination of the two generates circular forces acting radially outward. In this way, whereas one CFG produces a circular force, two counter-rotating CFGs mounted side-by-side or back-to-back are configured to produce a bilinear force. (See, e.g., Figure 10). The controlled combination of circular forces from multiple CFGs is used to achieve higher degrees of vibration control.

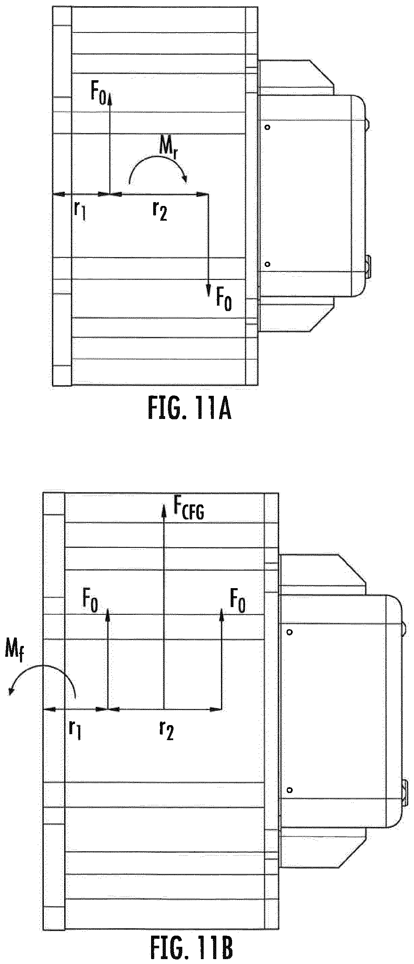

Referring to Figure 11A, when CFGs are arranged in pairs, the imbalanced masses revolve in distinct parallel planes that are separated by a distance (e.g., $r_2$-$r_1$), whereby the opposing force components produce a residual moment ($M_r$). This residual moment varies inversely with the force output:

$$M_r = r_2 \cdot F_0 \sin\left(\frac{\varphi_1 - \varphi_2}{2}\right)$$

As illustrated in Figure 11B, because the imbalanced masses each typically revolve in planes some distance from a mounting bracket, the total force of the CFGs produces moment about the mounting bracket. This force moment varies linearly with the force output:

$$M_f = \left(r_1 + \frac{1}{2}r_2\right) \cdot F_{CFG}$$

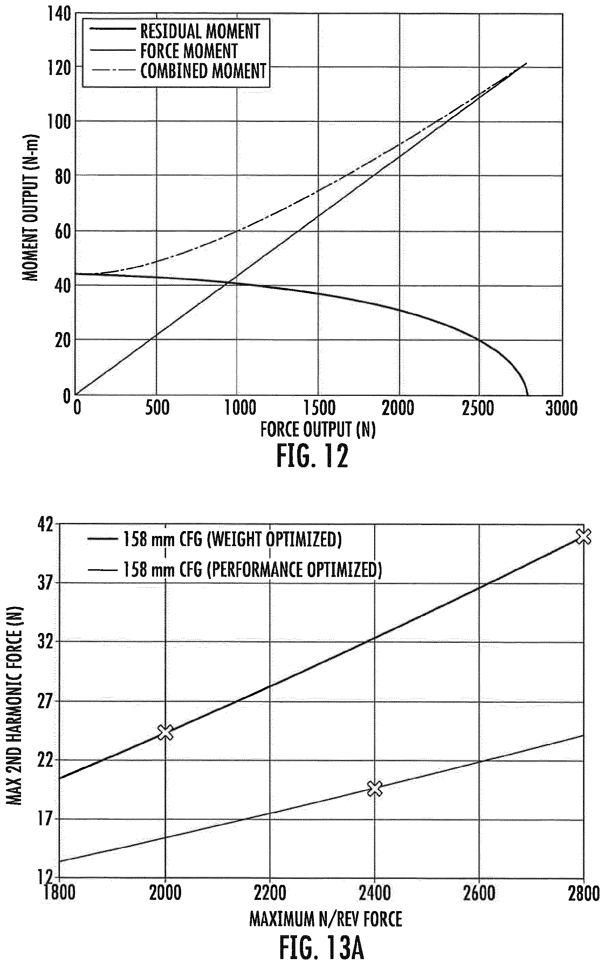

The residual moment and force moment are perpendicular, and the total moment of the CFGs is the vector sum of residual and force moment as shown in Figure 12:

$$M_{CFG} = \sqrt{M_r^2 + M_f^2}$$

Residual moments can further be minimized by reducing the distance (e.g., $r_2$) between the center of mass of the two imbalanced masses. Another approach to reduce the residual moment is to change the inertia (J) of the rotating (movable) imbalance. By increasing the inertia (J), the residual moment is decreased.

In another exemplary implementation, when a CFG is mounted vertically, gravity accelerates and decelerates the imbalanced masses as they revolve:

$$\omega = \left(\frac{mrg}{J\omega_0}\right)\sin\left(\omega_0 t + \varphi\right) + \omega_0$$

This fluctuation in speed due to gravity creates a force distortion at the second harmonic, which is inversely proportional to angular speed ($\omega$) and rotor inertia ($J$), proportional to the imbalance authority ($mr$), and varies with the relative phase angle ($\varphi$). The 2nd harmonic distortion can be much more pronounced at low force outputs such that total harmonic distortion (THD) is predominantly due to the 2nd harmonic.

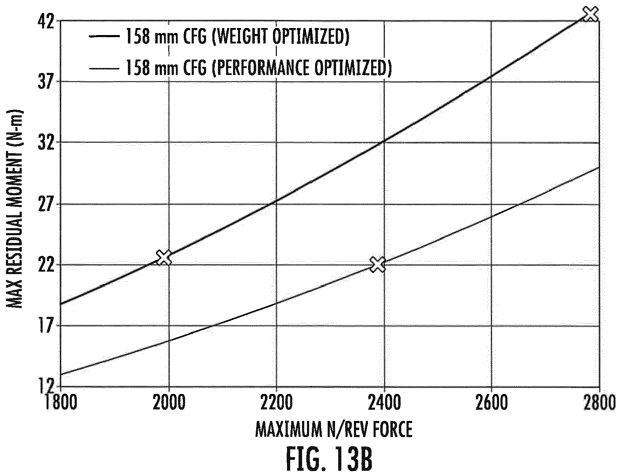

Referring to Figure 13A, the second harmonic force distortion can also be reduced by increasing the inertia of the imbalanced mass, which results in a decrease in the residual moment as well (See, e.g., Figure 13B).

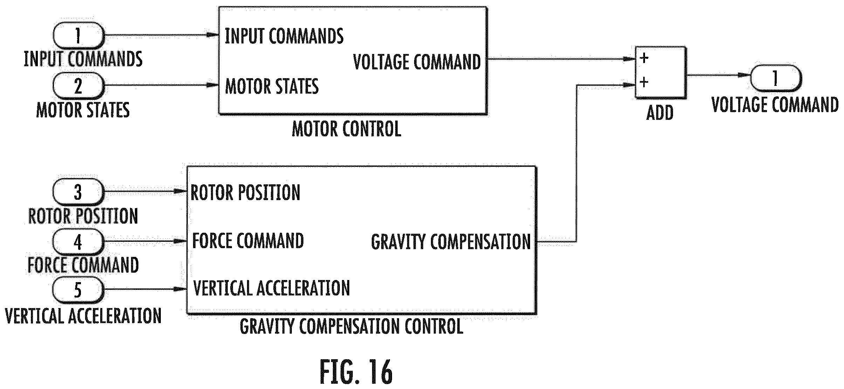

In another embodiment, measurement of the acceleration at the base of the CFG is used in the motor control feedback to reduce the second harmonic distortion. For example, one of the one or more accelerometers **320** can be incorporated onto co-located electronics (e.g., integrated with the controller **200**). As discussed above, this CFG-positioned accelerometer can also be used to control vibration by providing an input to the central controller 300 for determining the vibration to be controlled. Figure 16 shows a block diagram of the accelerometer in the motor control. The gravity compensation term for motor control is calculated from the following general equation:

$$V_{GC} = f\left(\phi, F_{cmd}, a_z\right)$$

where

$V_{GC}$ = Gravity compensation for motor control

$\Phi$ = Rotor position

$F_{cmd}$ = Force command

$a_z$ = Vertical acceleration

$V_{GC}$ can be implemented as analytical function or table look-up. One exemplary form of the above function for voltage motor control is as follows.

$$V_{GC} = A_{GC}\sin\left(\phi + P_{GC}\right)\cdot C_F\left(F_{cmd}\right)\cdot C_a\left(a_z\right)$$

$A_{GC}$ and $P_{GC}$ are amplitude gain and phase, respectively, to take dynamics of motor circuit into account. $C_F(F_{cmd})$ and $C_a(a_z)$ are variable coefficients to change the gravity compensation amount with respect to force command and vertical acceleration. $C_F(F_{cmd})$ and $C_a(a_z)$ can be implemented as analytical function or table look-up. Exemplary implementation of $C_F(F_{cmd})$ and $C_a(a_z)$ are presented in the below.

$$C_F\left(F_{cmd}\right) = -A_F F_{cmd} + B_F$$

$$C_a\left(a_z\right) = A_a a_z$$

where $A_F$, $B_F$, and $A_a$ are tuning parameters. Note that the accelerometer can have additional functionality.

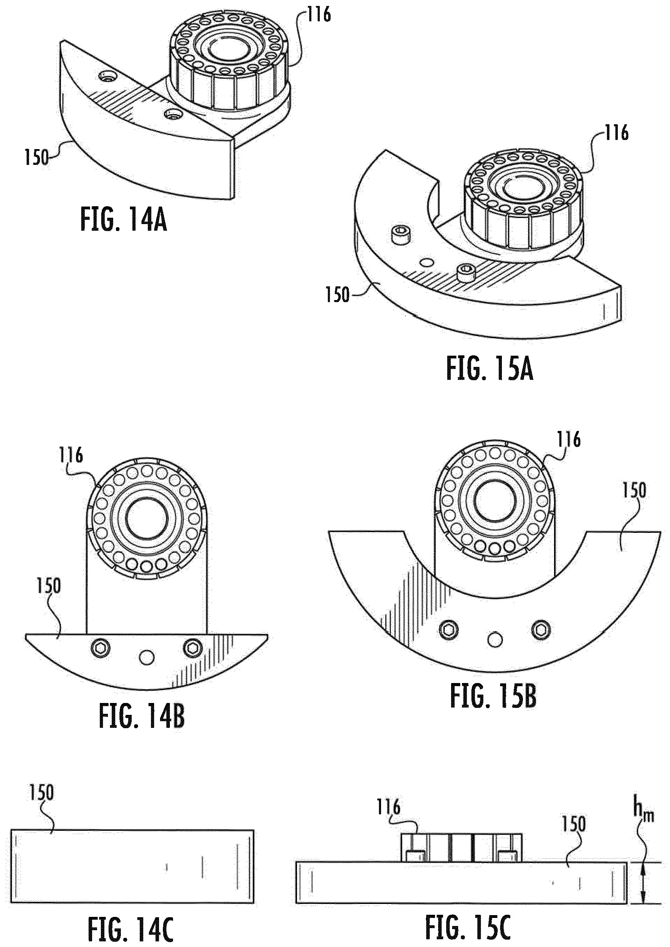

Figures 14A-14C and 15A-15C show various configurations for the rotating mass 150. Specifically, Figures 14A-14C depict the rotating mass **150** in a "weight optimized" configuration in which a center of mass of the rotating mass **150** is spaced at a greatest radius possible relative to the axis of rotation for a given set of system constraints. In this configuration, a substantially equivalent inertia is produced using a rotating mass **150** having a relatively small size. In contrast, Figures 15A-15C depict the rotating mass 150 in a "moment optimized" or "performance optimized" configuration in which a height $h$ of the rotating mass **150** is reduced (e.g., about 50% of the thickness of the weight optimized mass) such that adjacent CFGs are positioned closer to one another, thereby allowing the distance (e.g., $r_2$) between

the center of mass of adjacent imbalanced masses to be minimized as discussed above to help reduce the residual moment. The "moment optimized" mass can have an inertia that is approximately twice that of the "weight optimized" mass even though the CFG with a "moment optimized" mass may only be about 10% heavier than the CFG with a "weight optimized" mass.

The present subject matter can be embodied in other forms without departure from the spirit and essential characteristics thereof. The embodiments described therefore are to be considered in all respects as illustrative and not restrictive. Although the present subject matter has been described in terms of certain preferred embodiments, other embodiments that are apparent to those of ordinary skill in the art are also within the scope of the present subject matter.

**Claims**

1. A circular force generator (CFG) (100) for use in an active vibration control system, comprising:

   a component housing;
   a center shaft (120) positioned in a fixed relationship with respect to the component housing (114);
   a pair of motors (110) each having a rotor (116) and a fixed stator (112) mounted to endplates (114);
   a rotating mass (150) eccentrically connected to each rotor (116) such that rotation of the rotor (116) about the shaft (120) generates a circular force with a rotating force magnitude and a controllable rotating force phase; and
   the rotor (116) of each motor (110) coupled for rotation about the center shaft (120) by a bearing (130) mounted inside the motor (110).

2. The CFG (100) of claim 1, wherein the bearing (130) is a ball bearing having a bore diameter of about 15 mm.

3. The CFG (100) of claim 1, wherein the bearing (130) comprises a substantially sealed, grease-lubricated bearing.

4. The CFG (100) of claim 1, wherein an inertia of the rotating mass (150) is selected to reduce at least a second harmonic force distortion of the at least one rotor (116).

5. The CFG (100) of claim 1, comprising a controller (200) configured to control the rotating force magnitude and a rotating force phase of the rotor (116), the controller comprising a Hall-effect sensor servo control.

6. The CFG (100) of claim 5, wherein the Hall-effect sensor servo control comprises a plurality of standard commutation hall sensors and at least one 1/rev Hall sensor (160b).

7. The CFG (100) of claim 1, comprising a controller (200) contained in the component housing, the controller (200) being configured to receive digital commands from a central controller (300).

8. The CFG (100) of claim 7, wherein the controller (200) is configured to be selectively positioned within the component housing at any of a variety of positions with respect to the at least one rotor (116).

9. The CFG (100) of claim 7, wherein the controller (200) and the central controller (300) are configured to be powered by a 28 VDC aircraft power supply.

10. The CFG (100) of claim 7, wherein the central controller (300) generates the digital commands based on inputs from one or more accelerometers (320).

11. The CFG (100) of claim 1, wherein a distance (r) between centers of mass of each of the at least two rotating masses (150) is selected to reduce a residual moment between a center of mass of each of the at least two rotating masses (150) by reducing the distance between the center of mass of each rotating mass (150).

12. The CFG (100) of claim 10, wherein the inputs from one or more accelerometers (320) comprise a measurement of a base acceleration at or near the rotor (116); and
    wherein a reduction of at least one of a residual moment or the second harmonic force distortion of the rotor (116) is based on the base acceleration.

13. The CFG (100) of claim 5, wherein the controller (200) is positioned within the component housing.

14. The CFG (100) of claim 5, wherein the CFG (100) and the controller (200) are configured to fit within a footprint of 137.2mm (5.4 inches) in width and length and of 119.4mm (4.7) inches in height.

15. The CFG (100) of claim 5, wherein the CFG (100) and the controller (200) are configured to fit within a footprint of a height between 63.5mm (2.5 inches) to 76.2mm (3.0 inches) and a length between 180.3mm (7.1 inches) and 266.7mm (10.5 inches).

16. The CFG (100) of claim 4, wherein the CFG (100) wherein the inertia is selected to reduce at least one of a residual moment or the second harmonic force distortion of the rotor (116).

17. The CFG (100) of claim 1, wherein each of the pair of motors (110) is positioned between the bearing (130) and all rotating masses (150) that are connected to the rotor (116) within the component housing.

FIG. 1A

FIG. 1B

FIG. 2

FIG. 3

FIG. 4

FIG. 5A

FIG. 5B

FIG. 6A

FIG. 6B

FIG. 6C

**FIG. 6D**

**FIG. 7**

310

320

#1
#2
#3
#4
⋮
#14

300

28 VDC

28 VDC

28 VDC

28 VDC

28 VDC

100

ARINC COCKPIT
INTERFACE

USB MAINTENANCE
INTERFACE

DISCRETE INPUT 1-5

RELAY OUTPUTS (1-3)

FIG. 8

$F_0$

150b

$\phi_1$

$F_{CFG}$

$\phi_2$

$F_0$

150a

FIG. 9

FORCE PROFILE VARIATIONS FOR BIAXIAL FORCE GENERATOR

FIG. 10

FIG. 11A

FIG. 11B

FIG. 12

FIG. 13A

FIG. 13B

FIG. 14A

FIG. 15A

FIG. 14B

FIG. 15B

FIG. 14C

FIG. 15C

MOTOR CONTROL

INPUT COMMANDS
VOLTAGE COMMAND
MOTOR STATES

1 INPUT COMMANDS
2 MOTOR STATES

ADD
VOLTAGE COMMAND
1

GRAVITY COMPENSATION CONTROL

ROTOR POSITION
FORCE COMMAND
VERTICAL ACCELERATION
GRAVITY COMPENSATION

3 ROTOR POSITION
4 FORCE COMMAND
5 VERTICAL ACCELERATION

FIG. 16

Europäisches
Patentamt

European
Patent Office

Office européen
des brevets

# EUROPEAN SEARCH REPORT

**Application Number**

EP 19 19 6033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 409 462 A1 (WRIGHT BARRY CORP [US]) 23 January 1991 (1991-01-23) * column 1, lines 4-9 * * column 1, line 49 - column 2, line 10 * * column 2, lines 16-35 * * column 3, line 7 - column 6, line 41 * * figures 1a-4 * | 1-17 | INV. B64C27/00 F16F15/22 F16F7/10 |
| A | WO 2009/126608 A2 (LORD CORP [US]; JOLLY MARK R [US]; MEYERS ANDREW D [US]; MELLINGER DAN) 15 October 2009 (2009-10-15) * the whole document * | 1-17 | |
| E | WO 2014/085236 A1 (LORD CORP [US]; TRULL MICHAEL W [US] ET AL.) 5 June 2014 (2014-06-05) * the whole document * | 1,2,5,7, 8,10,13 | |

| TECHNICAL FIELDS SEARCHED (IPC) |
|---|
| B64C F16F |

The present search report has been drawn up for all claims

| Place of search | Date of completion of the search | Examiner |
|---|---|---|
| The Hague | 23 September 2019 | Fernández Plaza, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 19 6033

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2019

| Patent document cited in search report | | | Publication date | Patent family member(s) | | | Publication date |
|---|---|---|---|---|---|---|---|
| EP 0409462 | A1 | | 23-01-1991 | CA | 2020801 | A1 | 15-01-1991 |
| | | | | DE | 69008633 | D1 | 09-06-1994 |
| | | | | DE | 69008633 | T2 | 24-11-1994 |
| | | | | EP | 0409462 | A1 | 23-01-1991 |
| | | | | JP | H03149430 | A | 26-06-1991 |
| | | | | US | 5005439 | A | 09-04-1991 |
| WO 2009126608 | A2 | | 15-10-2009 | CA | 2722626 | A1 | 15-10-2009 |
| | | | | CN | 102056797 | A | 11-05-2011 |
| | | | | EP | 2280868 | A2 | 09-02-2011 |
| | | | | EP | 2985222 | A1 | 17-02-2016 |
| | | | | KR | 20100135286 | A | 24-12-2010 |
| | | | | KR | 20160142828 | A | 13-12-2016 |
| | | | | KR | 20170045400 | A | 26-04-2017 |
| | | | | WO | 2009126608 | A2 | 15-10-2009 |
| WO 2014085236 | A1 | | 05-06-2014 | EP | 2926026 | A1 | 07-10-2015 |
| | | | | US | 2015321752 | A1 | 12-11-2015 |
| | | | | WO | 2014085236 | A1 | 05-06-2014 |

EPO FORM P0459

For more details about this annex : see Official Journal of the European Patent Office, No. 12/82